# EUROPÄISCHE PATENTANMELDUNG

(11) **EP 4 521 233 A1**
(43) Veröffentlichungstag der Anmeldung: **12.03.2025**
(21) Anmeldenummer: 24191642.8
(22) Anmeldetag: 30.07.2024
(51) Int. Cl.: G06F 8/34, G06F 8/35, G06F 8/30, G06F 8/41

(54) **VERFAHREN ZUM ERZEUGEN EINES STEUERUNGSPROGRAMMES FÜR EINE ZIELPLATTFORM, VORRICHTUNG ZUR DATENVERARBEITUNG, COMPUTERPROGRAMMPRODUKT UND DATENTRÄGER**

(30) Priorität: 07.09.2023 DE 102023124151
(71) Anmelder: dSPACE GmbH, 33102 Paderborn (DE)
(72) Erfinder: Mair, Michael, 33102 Paderborn (DE)

(57) **Zusammenfassung**

Die Erfindung betrifft ein computerimplementiertes Verfahren zum Erzeugen eines Steuerungsprogrammes für eine Zielplattform aus einem graphischen Steuerungsmodell (12) einer Entwicklungsplattform, wobei das graphische Steuerungsmodell (12) ein Blockdiagramm (12) mit einer Mehrzahl von Blöcken (14) umfasst, wobei beim Erzeugen des Steuerungsprogrammes für die Zielplattform aus dem graphischen Steuerungsmodell (12) Blockpaare umfassend einen ersten und einen zweiten Bock (14a, 14b) identifiziert werden, bei denen der erste und der zweite Block (14a, 14b) mit mindestens einer Signalverbindung (16) miteinander in der Form verbunden sind, dass ein Ausgang des ersten Blockes (14a) einen Eingang des zweiten Blockes (14b) treibt, und bei denen
i) der erste Block (14a) und der zweite Block (14b) in der Form ausgestaltet sind, dass ein Eingangssignal (Ii) des ersten Blockes (14a) einem Ausgangssignal (O₂) des zweiten Blockes (14b) entspricht; oder
ii) der erste Block (14a) und der zweite Block (14b) in der Form ausgestaltet sind, dass ein Eingangssignal (I₃) des ersten Blockes (14a) einem Zwischenergebnis (Aux₄) des zweiten Blockes (14b) entspricht, und der zweite Block (14b) in der Form ausgestaltet ist, dass bei einer das Zwischenergebnis (Aux₄) verwendenden Operation (OpZ) des zweiten Blockes (14b) ein Eingangssignal dieser Operation (OpZ) ersetzbar ist.

Weiterhin betrifft die Erfindung eine Vorrichtung (10) zur Datenverarbeitung umfassend Mittel zur Ausführung des obigen Verfahrens, ein Computerprogrammprodukt und einen entsprechenden computerlesbaren Datenträger.

## Beschreibung

Die Erfindung betrifft ein computerimplementiertes Verfahren zum Erzeugen eines Steuerungsprogrammes für eine Zielplattform aus einem graphischen Steuerungsmodell einer Entwicklungsplattform.

Weiterhin betrifft die Erfindung ein Verfahren zum Konfigurieren einer als Steuergerät ausgestalteten Zielplattform, bei dem ein Steuerungsprogramm für die Zielplattform aus einem eingelesenen graphischen Steuerungsmodell nach dem obigen Verfahren erzeugt wird.

Zudem betrifft die Erfindung eine Vorrichtung zur Datenverarbeitung umfassend Mittel zur Ausführung des erstgenannten Verfahrens.

Weiterhin betrifft die Erfindung ein Computerprogrammprodukt, umfassend Befehle, die bei der Ausführung des Programms durch einen Computer diesen veranlassen, das erstgenannte Verfahren auszuführen.

Ferner betrifft die Erfindung einen computerlesbaren Datenträger, auf dem das obige Computerprogrammprodukt gespeichert ist.

Verfahren zur computergestützten Erzeugung eines Steuerungsprogramms aus einem graphischen Steuerungsmodell sind seit längerem bekannt und gehören zu den grundlegenden Funktionalitäten von Entwicklungsumgebungen. Insbesondere lassen sich derart Programme für Steuerungssysteme wie beispielsweise Steuergeräte erstellen.

Das graphische Steuerungsmodell liegt oft in Form eines Blockdiagrammes vor, mit dessen Hilfe beispielsweise die mathematische Funktionalität eines Regelungsalgorithmus modelliert und dargestellt werden. Mittels des graphischen Steuerungsmodelles können Prozesse, Regler und/oder allgemein das Verhalten des Steuergeräts zunächst simuliert und das Vorliegen von gewünschten Eigenschaften überprüft werden. Das das Modell bildende Blockdiagramm umfasst in der Regel mehrere über Signalverbindungen verbundene Blöcke, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf Eingangssignale aus dem letzten Zeitschrittes eine oder mehrere Operationen anwenden, um Ausgangssignale des aktuellen Zeitschrittes zu erzeugen. Entsprechend sind übliche Annahmen in Bezug zu Steuerungsprogrammen, wie beispielsweise einer Lebensdauer von Variablen des Steuerungsprogramms nicht ohne weiteres auf das graphische Steuerungsmodell übertragbar.

Graphische Steuerungsmodell können neben einem zyklisch ausgeführten Teilmodell zur Beschreibung näherungsweise zeitkontinuierlichen Verhaltens des Steuergerätes auch ein Teilmodell zur Beschreibung eines diskreten Verhaltens umfassen, in dem eine Anzahl von Zuständen und Übergangsbedingungen definiert sind.

Verfahren zum Erzeugen von Steuerungsprogrammen aus graphischen Steuerungsmodellen werden auch als Codegeneratoren bezeichnet. Dabei handelt es sich um ein Computerprogramm, das das graphische Steuerungsmodell in Quellcode der gewählten Zielplattform - sprich in das Steuerungsprogramm - übersetzt. Das Steuerungsprogramm liegt im Gegensatz um graphischen Steuerungsmodell in vollständig textueller Form vor und umfasst Instruktionen zur Ausführung auf der Zielplattform. Codegeneratoren gewährleisten somit eine sichere und fehlerfreie Implementierung einer abstrakten Funktionsbeschreibung (graphisches Steuerungsmodell) in ein Programm für die Zielplattform (Steuerungssystem).

Ein Verfahren zum Erzeugen eines Steuerungsprogrammes ist beispielsweise in der Druckschrift EP 4 148 557 A1 beschrieben.

Beim Erzeugen von Steuerungsprogrammen aus graphischen Steuerungsmodellen, besteht ein übliches Vorgehen darin, für j eden Ausgang eines Blocks eine Variable im Steuerungsprogramm zu erzeugen. Allerdings hat dies den Nachteil, dass in der Regel dabei zunächst mehr Blockvariablen entstehen, als wirklich erforderlich sind. Durch eine anschließende Optimierung kann die Anzahl von Blockvariablen bzw. allgemein die Codegröße des Steuerungsprogrammes verringert werden. So ist es aus der EP 2418577 A1 bekannt, ein Blockdiagramm in eine Zwischendarstellung zu transformieren und auf diese Zwischendarstellung mindestens eine Optimierung anzuwenden, um eine optimierte Zwischendarstellung zu erzeugen. Eine Vielzahl an weiteren Optimierungen, die an sich aus dem Compilerbau bekannt sind, kann nacheinander angewandt werden, um weiter optimierte Zwischendarstellungen zu erzeugen. Anschließend wird aus der optimierten Zwischendarstellung das Steuerungsprogramm insbesondere in C-Code erzeugt.

Da jede Optimierung in einer veränderten Zwischendarstellung resultiert, kann es von der Reihenfolge der Optimierungsschritte abhängen, in welchem Maße der Code insgesamt optimiert wird. Zudem verursachen insbesondere die unterschiedliche Art der Indizierung von Arrays im graphischen Steuerungsmodellen und im Steuerungsprogramm, wobei die Indizes von Arrays bei 1 oder bei 0 beginnen können, Situationen, die sich durch Optimierung der Zwischendarstellung nicht lösen lassen.

Vor diesem Hintergrund ist es eine Aufgabe der vorliegenden Erfindung, den Stand der Technik weiterzuentwickeln und insbesondere ein Erzeugen von kompakten Steuerungsprogrammen zu unterstützen.

Diese Aufgabe wird durch den Gegenstand der Hauptansprüche gelöst. Bevorzugte Weiterbildungen finden sich in den Unteransprüchen.

Erfindungsgemäß wird also ein computerimplementiertes Verfahren zum Erzeugen eines Steuerungsprogrammes für eine Zielplattform aus einem graphischen Steuerungsmodell einer Entwicklungsplattform bereitgestellt, wobei das graphische Steuerungsmodell ein Blockdiagramm mit einer Mehrzahl von Blöcken umfasst, wobei beim Erzeugen des Steuerungsprogrammes für die Zielplattform aus dem graphischen Steuerungsmodell Blockpaare umfassend einen ersten und einen zweiten Bock identifiziert werden, bei denen der erste und der zweite Block mit mindestens einer Signalverbindung miteinander in der Form verbunden sind, dass ein Ausgang des ersten Blockes einen Eingang des zweiten Blockes treibt, und bei denen
i) der erste Block und der zweite Block in der Form ausgestaltet sind, dass ein Eingangssignal des ersten Blockes im Rahmen einer für die Ausführung des Steuerungsprogrammes notwendigen Rechengenauigkeit und für alle Werte in einem für die Ausführung des Steuerungsprogrammes notwendigen Wertebereich einem Ausgangssignal des zweiten Blockes entspricht; oder
ii) der erste Block und der zweite Block in der Form ausgestaltet sind, dass ein Eingangssignal des ersten Blockes im Rahmen einer für die Ausführung des Steuerungsprogrammes notwendigen Rechengenauigkeit und für alle Werte in einem für die Ausführung des Steuerungsprogrammes notwendigen Wertebereich einem Zwischenergebnis des zweiten Blockes entspricht, und der zweite Block in der Form ausgestaltet ist, dass bei einer das Zwischenergebnis verwendenden Operation des zweiten Blockes ein Eingangssignal dieser Operation ersetzbar ist.

Ein Aspekt der Erfindung ist also, dass im graphischen Steuerungsmodell Blockpaare identifiziert werden, bei denen die aufeinanderfolgenden Blöcke zueinander entgegengesetzte und/oder inverse Operationen, ausführen. Im Fall i) weist das Ergebnis der beiden Blöcke - sprich das Ausgangssignal des zweiten Blockes im Rahmen der für die Ausführung des Steuerungsprogrammes notwendigen Rechengenauigkeit und für alle Werte in dem für die Ausführung des Steuerungsprogrammes notwendigen Wertebereich ein identisches Verhalten zum Eingangssignal des ersten Blockes auf. Im Fall ii) umfasst der zweite Block die zum ersten Block entgegengesetzte und/oder inverse Operation als Teil seines Blockcodemusters in einer im Blockcodemusters ersetzbaren Form. Unter Blockcodemuster wird vorliegend im engeren Sinne eine konkrete Ausprägung eines Blockes mit einer bestimmten Parametrierung und einem oder mehreren bestimmten Eingangssignalen in Anteile des Steuerungsprogrammes, das bevorzugt in C-Code vorliegt, verstanden. Zudem werden vorliegend im weiteren Sinne unter Blockcodemuster auch die auf Ebene des graphischen Steuerungsmodelles im Block definierten Operationen und Rechenschritte des Blockes verstanden, die auf das Eingangssignal und/oder den Zwischenergebnissen angewendet werden, um das Ausgangssignal oder Zustandswerte des j eweiligen Blockes zu generieren. Zudem weist im Falle ii) das Zwischenergebnis des zweiten Blockes im Rahmen der für die Ausführung des Steuerungsprogrammes notwendigen Rechengenauigkeit und für alle Werte in dem für die Ausführung des Steuerungsprogrammes notwendigen Wertebereich ein identisches Verhalten zum Eingangssignal des ersten Blockes auf.

Die Erfindung ermöglicht diese Situationen, bei denen ein Nutzer mittels des Blockdiagrammes ein Modell modelliert hat, bei denen in zwei aufeinanderfolgenden Blöcken zueinander entgegengesetzte Operationen durchgeführt werden, zu erkennen und eröffnet damit die Möglichkeit die unnötigen Berechnungsschritte zu entfernen. Im Fall i) können umständliche Berechnungen auf einer Signalverbindung des zweiten Blockes zu einem Nachfolgeblock des zweiten Blockes entfallen, während im Fall ii) eine umständliche Berechnung im identifizierten Blockpaar entfallen kann. Somit schafft die Erfindung die Möglichkeit das Anlegen von unnötigem Code für die dem Blockpaar nachfolgenden Blöcke zu vermeiden. In anderen Worten ermöglicht die Erfindung während der Codegenerierung die Signalverbindungen und Blockparameter im Blockdiagramm so zu modifizieren, dass sich das Verhalten des Modelles nicht ändert, aber die unnötigen Operationen bereits im initial angelegten Code nicht enthalten sind.

Das graphische Steuerungsmodell liegt also in anderen Worten in der Form eines Blockdiagrammes vor, das bevorzugt eine Vielzahl an Blöcken umfasst, die miteinander über die Signalverbindungen verbunden sind. Die Blöcke in dem Blockdiagramm können atomar sein, also aus Sicht der umgebenden Blöcke eine Einheit bilden, bei der zu Beginn eines Rechenschritts alle Eingangssignale anliegen müssen und zum Ende eines Rechenschritts alle Ausgangssignale vorhanden sind. Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren.

Im Sinne der Erfindung wird unter Blockpaaren, bei denen der erste und der zweite Block mit mindestens einer Signalverbindung miteinander in der Form verbunden sind, dass ein Ausgang des ersten Blockes einen Eingang des zweiten Blockes treibt, vorliegend auch Blockpaare im Blockdiagramm verstanden, die über Subsystemgrenzen hinweg miteinander verbunden sind. Zudem werden darunter auch Blockpaare verstanden, bei denen zwischen dem ersten und zweiten Block weitere Blöcke geschaltet sind, die allerdings das auf der Signalverbindung übermittelte Signal nicht verändern, wie beispielsweise Signalrouting betreffende Blöcke oder Blöcke, die mehrere Signale zusammenfassen und anschließend wieder in Einzelsignale auseinanderziehen.

Über die Signalverbindung des ersten Blockes zum zweiten Block können Daten bzw. Signale übertragen werden; hierbei gibt der erste Block einen Wert oder je nach Definition mehrere zusammengehörige Werte aus und der zweite Block empfängt diese als sein Eingangssignal und berücksichtigt sie bei der Ermittlung von seinem Ausgangsignal - sprich bei der Ermittlung von einem oder mehreren zusammengehörigen Ausgabewerten. Signale können skalare Variablen und/oder strukturierte Datentypen wie Arrays enthalten, wie dies beispielsweise bei einem Bus der Fall ist.

Wenn ein Block den Zugriff auf eine mehrkomponentige Variable umfasst, kann das Einsparen einer auf diese Variable zugreifende Operation eine beträchtliche Einsparung an Speicherplatz und an Ausführungszeit ermöglichen, beispielsweise indem Instruktionen dafür im Code gar nicht erst generiert werden und dementsprechend auch nicht zur Laufzeit ausgeführt werden müssen. Die mehrkomponentige Variable kann ein Vektor, der eine Vielzahl von Variablen desselben Datentyps umfasst, eine Matrix, die eine Vielzahl von Vektoren umfasst, eine Struktur, die eine Vielzahl von Variablen beliebigen Datentyps umfasst, ein Vektor oder eine Matrix von Strukturen sein.

Der Schritt des Erzeugens des Steuerungsprogrammes kann eine Mehrzahl von Teilschritten beinhalten, wie das Überprüfen einer Anzahl von Regeln und das Anfügen von weiteren Codegenerierungsinformationen. Das erfindungsgemäße Identifizieren kann prinzipiell in einem beliebigen Zwischenschritt erfolgt.

Wie bereits erwähnt ist ein Aspekt, dass zueinander entgegengesetzte und/oder inverse Operationen in aufeinanderfolgenden Blöcken, was im Prinzip eine rechenintensive Möglichkeit darstellt, den Eingangswert des ersten Blockes durchzuschleusen, identifiziert werden. Insbesondere entsprechen im Rahmen der für das Steuerungsprogramm notwendigen Rechengenauigkeit das Ausgangssignal des zweiten Blockes bzw. das Zwischenergebnis des zweiten Blockes dem Eingangssignal des ersten Blockes und weisen für alle Werte in dem für das Steuerungsprogramm notwendigen Wertebereich das gleiche Verhalten auf.

Bevorzugt umfasst das Identifizieren von nach i) und/oder ii) ausgestalteten Blockpaaren ein Analysieren der von den Blöcken durchgeführten Operationen. Weiter bevorzugt wird bei Blockpaaren, bei denen der erste und der zweite Block mit mindestens einer Signalverbindung miteinander in der Form verbunden sind, dass der Ausgang des ersten Blockes den Eingang des zweiten Blockes treibt, Operationspaare identifiziert, die zueinander entgegengesetzt sind und/oder zueinander invers sind. Ob eine Operation eines Blockes zu einer Operation eines anderen Blockes entgegensetzt und/oder invers ist, hängt bevorzugt nicht nur von der Art der Operation ab, sondern weiter auch von dem durch die Operation verarbeitenden Datentyp, von der Rechengenauigkeit, und/oder von dem betrachteten Wertebereich. So sind beispielsweise die einen Wert quadrierende Operation zu der aus einem Wert die Quadratwurzel ziehende Operation zueinander entgegengesetzt, solange der Wertebereich der positiven Zahlen betrachtet wird. Weiterhin sind für den Datentyp Ganze Zahl (*Integer*), das Addieren der ganzen Zahl 1 und das Subtrahieren der ganzen Zahl 1 unabhängig von der Rechengenauigkeit zueinander entgegengesetzte Operationen. Allerdings hängt es für den Datentyp Gleitkommazahl *(Float)* von der für das Steuerungsprogramm notwendigen Rechengenauigkeit ab, ob das Addieren eines Wertes und das Subtrahieren des gleichen Wertes zueinander entgegengesetzte Operationen darstellen. Unter dem Begriff für das Steuerungsprogramm notwendigen Rechengenauigkeit wird insbesondere jene Rechengenauigkeit verstanden, die für die Funktionsfähigkeit des Steuerungsprogramm notwendig ist. Weiterhin wird unter dem Begriff für das Steuerungsprogramm notwendigen Wertebereich, jener Wertebereich verstanden, der von einem Signal beim Ausführen des Steuerungsprogrammes eingenommen werden kann.

Bevorzugt ist für das Identifizieren von nach i) und/oder ii) ausgestalteten Blockpaaren weiter vorgesehen, dass in einer Datenbank eine Liste mit Operationspaaren hinterlegt ist, die unter gewissen Rahmenbedingung als entgegensetzt und/oder inverse Operationen gelten. Wenn in einem Blockpaar, bei dem der erste und der zweite Block mit mindestens einer Signalverbindung miteinander in der Form verbunden sind, dass der Ausgang des ersten Blockes den Eingang des zweiten Blockes treibt, Operationspaare identifiziert worden sind, die in der Liste als zueinander entgegensetzt und/oder inverse Operationen gelten, wird bevorzugt in einem weiteren Schritt geprüft, ob diese Operationen auch im Rahmen des vorliegenden Blockdiagrammes zueinander entgegensetzt und/oder inverse Operationen sind, indem bevorzugt der Wert und das Verhalten des Eingangssignales des ersten Blockes und der Wert und das Verhalten des Ausgangssignales des zweiten Blockes, bzw. der Wert und das Verhalten des Zwischenergebnis im zweiten Block analysiert wird. Besonders bevorzugt wird geprüft, ob die Operation des ersten Blockes und die Operation des zweiten Blockes für das spezifische Blockdiagramm und den auf der Signalverbindung übertragengen Datentyp im Rahmen einer Fixed-Point-Genauigkeit das gleiche Verhalten des Ergebnisses der beiden Operationen zu dem Eingangssignal des ersten Blockes liefern.

Gemäß einer bevorzugten Weiterbildung der Erfindung ist vorgesehen, dass bei Identifikation eines nach i) ausgestalteten Blockpaares beim Erzeugen des Steuerungsprogrammes das Steuerungsprogrammes in der Form erzeugt wird, dass es einem modifizierten Blockdiagramm entspricht, bei dem eine Abzweigung vor dem ersten Block mit dem Eingangssignal des ersten Blockes unter Umgehung des ersten und zweiten Blockes einen Nachfolgeblock des zweiten Blockes treibt. In anderen Worten wird die Situation, dass die zwei Blöcke zueinander entgegengesetzte und/oder inverse Operationen ausführen also dahingehend aufgelöst, dass vor dem ersten Block eine Abzweigung erstellt wird, so dass das Eingangssignal des ersten Blockes direkt und unter Umgehung des ersten und zweiten Blockes mit dem Nachfolgeblock des zweiten Blockes verbunden wird. Besonders bevorzugt wird auch die Signalverbindung des zweiten Blockes zu dem Nachfolgeblock des zweiten Blockes von dem Nachfolgeblock gelöst. Hat der zweite Block abgesehen von dem hier bezeichneten Nachfolgeblock keinen anderweitigen Nachfolger, der das Ausgangssignal des zweiten Blockes verarbeitet, wird bevorzugt die das Ausgangssignal des zweiten Blockes übermittelnde Signalverbindung terminiert. Entsprechend entfallen umständliche Berechnungen auf der Signalverbindung für alle Nachfolger des Blockpaares.

In diesem Zusammenhang ist weiter bevorzugt vorgesehen, dass im Falle, dass die das Ausgangssignal des zweiten Blockes übermittelnde Signalverbindung terminiert wird, bevorzugt auch das Blockcodemusters des zweiten Blockes in der Form angepasst wird, dass die entgegengesetzte und/oder inverse Operation im zweiten Block gar nicht erst berechnet wird.

Gemäß einer weiteren bevorzugten Weiterbildung der Erfindung ist vorgesehen, dass bei Identifikation eines nach ii) ausgestalteten Blockpaares beim Erzeugen des Steuerungsprogrammes das Steuerungsprogramm in der Form erzeugt wird, dass es einem modifizierten Blockdiagramm entspricht, bei dem eine Abzweigung vor dem ersten Block mit dem Eingangssignal des ersten Blockes unter Umgehung des ersten Blockes den zweiten umparametrierten Block treibt, und wobei beim umparametrierten Block das Eingangssignal der das Zwischenergebnis verwendenden Operation durch das Eingangssignal des ersten Blockes ersetzt ist. In anderen Worten wird die Situation, dass der zweite Block als Teil seines Blockcodemusters die zu dem vom ersten Block durchgeführte Operation inverse Operation enthält und die inverse Operation abschaltbar ist, also dahingehend aufgelöst, dass vor dem ersten Block eine Abzweigung erstellt wird, so dass das Eingangssignal des ersten Blockes direkt und unter Umgehung des ersten Blockes mit dem umparametrierten zweiten Block verbunden wird. Bevorzugt entfällt die Signalverbindung des ersten Blockes zum zweiten umparametrierten Block. Zudem wird der zweite Block umparametriert, um die Durchführung der das Zwischenergebnis erzielenden Operation zu umgehen.

Hat der erste Block durch den Wegfall der Signalverbindung zum zweiten umparametrierten Block keinen anderweitigen Nachfolger mehr, der das Ausgangssignal des ersten Blockes verarbeitet, wird bevorzugt die das Ausgangssignal des ersten Blockes übermittelnde Signalverbindung terminiert. Entsprechend entfällt eine umständliche Berechnung in dem Blockpaar.

In diesem Zusammenhang ist weiter bevorzugt vorgesehen, dass im Falle, dass die das Ausgangssignal des ersten Blockes übermittelnde Signalverbindung terminiert wird, bevorzugt auch das Blockcodemuster des ersten Blockes in der Form angepasst wird, dass die Operation im ersten Block, die zu der das Zwischenergebnis erzielenden Operation des zweiten Blockes invers ist, gar nicht erst berechnet wird.

Gemäß einer weiteren bevorzugten Weiterbildung der Erfindung ist vorgesehen, dass das Steuerungsprogramm in der Form erzeugt wird, dass es einem mehrfach modifizierten Blockdiagramm entspricht, bei dem nach einer ersten Modifikation des Blockdiagrammes eine oder mehrere weitere Identifikationen eines nach i) und/oder ii) ausgestalteten Blockpaares und entsprechende Modifikation des Blockdiagrammes erfolgt. In anderen Worten wird also bevorzugt nicht lediglich einmal nach Prüfung, ob Blockpaare mit zueinander entgegengesetzten und/oder inversen Operationen vorhanden sind das dem Steuerungsprogramm entsprechende Blockdiagramm modifiziert, sondern der Vorgang wird bevorzugt mehrfach durchgeführt.

Gemäß einer weiteren bevorzugten Weiterbildung der Erfindung ist vorgesehen, dass bei Identifikation eines nach i) und/oder ii) ausgestalteten Blockpaares beim Erzeugen des Steuerungsprogrammes eine Warnung generiert wird. Anstelle oder zusätzlich zum oben beschriebenen Verhalten, bei dem das Steuerungsprogramm in der Form erzeugt wird, dass es einem modifizierten oder mehrfach modifizierten Blockdiagramm entspricht, kann es vorteilhaft sein, den Nutzer durch Generierung einer Warnung auf die Situation aufmerksam zu machen. Insbesondere in Fällen, in denen die Modellmodifikation nicht möglich oder besonders aufwendig ist, kann derart dem Nutzer zurückgemeldet werden, dass unnötige Berechnungen durch Ummodellierung vermieden werden können.

Der erste und/oder der zweite Block können als unterschiedliche Typen ausgestaltet sein. Gemäß einer bevorzugten Weiterbildung der Erfindung ist vorgesehen, dass der zweite Block des Blockpaares als Selector-Block oder als Assignment-Block ausgestaltet ist. Bevorzugt werden also einer oder mehrere der folgenden Typen von Blöcken im Hinblick auf die Ausgestaltung des Blockpaares nach i) oder ii) geprüft:
- Ein Selector-Block, der ausgewählte Elemente aus einem Vektor, einer Matrix, oder einem mehrdimensionalen Signal extrahiert;
- Ein Assignment-Block, der Werte spezifischen Elementen eines Signals zuweist;

Insbesondere die unterschiedliche Art der Indizierung von Arrays im graphischen Steuerungsmodellen und im Steuerungsprogramm, wobei im graphischen Steuerungsmodell die Indizes von Arrays bevorzugt bei 1 beginnen und im Steuerungsprogramm die Indizes von Arrays bevorzugt bei 0 beginnen, führen dazu, dass beim erzeugten Steuerungsprogramm Zugriffe auf Indizes von Arrays automatisch mit einer -1 Zuweisung umgesetzt werden. Bei Blockkonstellationen im graphischen Steuerungsmodell, bei denen der Anwender allerdings eine 0-basierte Indizierung mittels einer modellierten +1 Operation in eine 1-basierte Indizierung umwandelt, führt das beschriebenen Verhalten zu sich aufhebenden Rechenschritten, bei denen der Indexwert unnötig um +1 erhöht wird, um anschließend wieder um -1 erniedrigt zu werden (oder umgekehrt). Bevorzugt wird in solchen Situationen wie bereits erwähnt, beim Erzeugen des Steuerungsprogrammes die modellierte Erhöhung um +1 mit der Erniedrigung um -1 aus der 1-basierten Indexierung verrechnet, indem die +1-Operation umgangen wird.

Wie bereits erwähnt ist bevorzugt vorgesehen, dass der erste und zweite Block des Blockpaares zueinander inverse Operationen und/oder zueinander entgegengesetzte Operationen ausführen. In diesem Zusammenhang ist gemäß einer weiteren bevorzugten Weiterbildung der Erfindung vorgesehen, dass der erste und zweite Block des Blockpaares dahingehend ausgestaltet sind, dass sie
- zueinander additiv inversen Operationen,
- zueinander logisch inversen Operationen,
- zueinander bitweise inversen Operationen,
- zueinander inversen mathematischen Funktionen,
- zueinander multiplikativ inversen Operationen,
- zueinander entgegengesetzte Datentypumwandlungen, und/oder
- Verknüpfungen davon,
durchführen.

Weiter bevorzugt kann in diesem Zusammenhang vorgesehen sein, dass der erste und zweite Block des Blockpaares dahingehend ausgestaltet sind, dass sie Verknüpfungen von Operationen durchführen, die in ihrer Gesamtheit invers zueinander sind.

Zueinander additiv inverse Operationen sind Operationen, die miteinander addiert das additiv neutrale Element ergeben. Insbesondere ist die zuvor beschriebenen Erhöhung eines Indizes um +1 und anschließender Erniedrigung um -1 ein Beispiel zweier zueinander additiv inverser Operationen, wobei vorliegend das additiv neutrale Element 0 ist.

Eine logische Operation ist eine Funktion, die einen Wahrheitswert liefert und/oder auf einem Wahrheitswert arbeitet. Bei der zweiwertigen, booleschen Logik liefert die Operation also wahr oder falsch, bei einer mehrwertigen Logik können auch entsprechend anderer Werte geliefert werden. Ein Beispiel zwei zueinander logisch inverser Operationen sind zwei logischen Exklusive-ODER-Operationen, auch XOR genannt, mit gleichem zweiten Eingabewert für den ersten und zweiten Block. Ein weiteres Beispiel ist die logische NICHT Operation (auch NOT genannt) als Operation für beide Blöcke.

Eine bitweise Operation ist eine Operation, die auf ein oder zwei Bitketten, Bitfeldern, Bitfolgen und/oder Bitvektoren auf der Ebene der einzelnen Bits durchgeführt wird. Ein Beispiel für zueinander bitweise inverse Operationen sind zwei entgegengesetzte in ihrer Anzahl gleiche zyklische Verschiebungen (auch bitweise Rotation oder ciruclar shift genannt), also beispielsweise ein zyklischer Linksshift um 2 Bit gefolgt von einem zyklischen Rechtsshift um 2 Bit.

In Bezug zu den logischen Operationen und den bitweisen Operationen wird in vielen Programmiersprachen, insbesondere der C-Familie, zwischen bitweise (= mehrgliedrig und komponentenweise) und logisch (= boolesch, also eine einzige Komponente) unterschieden.

Bei zueinander inversen mathematischen Funktionen handelt es sich vorliegend um zwei Funktionen, bei denen die eine Funktion jedem Element einer Urbildmenge ein Element einer Zielmenge zuschreibt und die andere Funktion entsprechend jedem Element der Zielmenge sein eindeutig bestimmtes Urbildelement zuweist. Beispielsweise handelt es sich um das Funktionspaar Sinus und Arkussinus, Exponentialfunktion und Logarithmusfunktion, oder quadratische Funktion und die Quadratwurzelfunktion.

Zueinander multiplikativ inverse Operationen sind Operationen, die miteinander multipliziert das neutrale Element ergeben. Beispielsweise ist eine Multiplikation um 7 gefolgt von einer Division um 7 ein Beispiel zweier zueinander multiplikativ inverser Operationen, wobei vorliegend das multiplikative neutrale Element 1 ist.

Zueinander entgegengesetzte Datentypumwandlungen sind Umwandlungen des Datentyps - auch Typumwandlung genannt - bei denen nacheinander durchgeführt wieder der ursprüngliche Datentyp generiert wird. Beispielsweise eine Umwandlung von einem Integer mit einer Größe von 16 Bit in einen Integer von 32 Bit und eine weitere Umwandlung zurück in die Größe von 16 Bit.

Selbstredend können der erste und zweite Block des Blockpaares auch dahingehend ausgestaltet sind, dass sie Verknüpfungen von Operationen ausführen, die in ihrer Gesamtheit zueinander entgegengesetzt und/oder invers sind. Ein Beispiel hierfür wäre, dass der erste Block eine Typumwandlung gefolgt von einem Linksshift - also einer bitweisen Operation -durchführt, wobei die Typumwandlung auf einen größeren Wertebereich so stattfindet, dass beim Linksshift keine Bits verloren gehen, und der zweite Block einen Rechtsshift gefolgt von der Typumwandlung auf den ursprünglichen Typ und Wertebereich durchführt. In diesem Beispiel ermöglicht die Typumwandlung die Betrachtung der Blockoperationen als zueinander inverse bitweise Operationen, so dass sie umgangen werden können.

Gemäß einer weiteren bevorzugten Weiterbildung der Erfindung umfasst das Erzeugen des Steuerungsprogrammes für die Zielplattform aus dem graphischen Steuerungsmodell der Entwicklungsplattform die Schritte
- Erzeugen einer Zwischendarstellung aus dem graphischen Steuerungsmodell,
- Optimieren der erzeugten Zwischendarstellung, und
- Erzeugen des Steuerungsprogrammes für die Zielplattform durch Übersetzen der optimierten Zwischendarstellung,
wobei wenigstens einer der Schritte, und insbesondere der Schritt Erzeugen der Zwischendarstellung, das Identifizieren von nach i) und/oder ii) ausgestalteten Blockpaaren umfasst.

Bevorzugt wird als ein Verfahren zum Erzeugen des Steuerungsprogrammes aus dem graphischen Steuerungsmodell bereitgestellt, bei dem das Erzeugen des Steuerungsprogrammes ein Transformieren des Blockdiagramms in die Zwischendarstellung, ein bevorzugt sukzessives Optimieren der Zwischendarstellung und ein Übersetzen der optimierten Zwischendarstellung in das Steuerungsprogrammes umfasst, wobei insbesondere schon beim Erzeugen der Zwischendarstellung nach i) und/oder ii) ausgestaltete Blockpaare identifiziert werden. Weil die Identifikation bevorzugt während der Transformation in die Zwischendarstellung erfolgt, sind noch sämtliche Informationen des Blockdiagramms verfügbar. Dadurch wird es insbesondere möglich, das Ergebnis von Blockdiagramm-Transformationen zu berücksichtigen und/oder eine für die Optimierung geeignete Ausführungsreihenfolge der Blöcke zu wählen bzw. zu erzwingen, sofern die entsprechenden Freiheitsgrade vorhanden sind.

Bevorzugt werden in der Zwischendarstellung die Blöcke des Blockdiagrammes in Anweisungen mit fester Ausführungsreihenfolge übersetzt, wodurch die Struktur der Zwischendarstellung semantisch eine textuelle Programmiersprache abbildet.

Bevorzugt werden die nach i) und/oder ii) ausgestaltete Blockpaare nicht lediglich identifiziert, sondern es findet zudem bevorzugt beim Transformieren ein Modifizieren des Blockdiagrammes statt. Diesbezüglich ist gemäß einer bevorzugten Weiterbildung der Erfindung vorgesehen, dass bei Identifikation eines nach i) ausgestalteten Blockpaares die Zwischendarstellung in der Form erzeugt wird, dass sie einem modifizierten Blockdiagramm entspricht, bei dem eine Abzweigung vor dem ersten Block mit dem Eingangssignal des ersten Blockes unter Umgehung des ersten und zweiten Blockes einen Nachfolgeblock des zweiten Blockes treibt.

Analog ist gemäße einer bevorzugten Weiterbildung der Erfindung vorgesehen, dass bei Identifikation eines nach ii) ausgestalteten Blockpaares die Zwischendarstellung in der Form erzeugt wird, dass sie einem modifizierten Blockdiagramm entspricht, bei dem eine Abzweigung vor dem ersten Block mit dem Eingangssignal des ersten Blockes unter Umgehung des ersten Blockes den zweiten umparametrierten Block treibt, und wobei beim umparametrierten Block das Eingangssignal der das Zwischenergebnis verwendenden Operation durch das Eingangssignal des ersten Blockes ersetzt ist.

Der Schritt des Transformierens kann eine Mehrzahl von Teilschritten beinhalten, wie das Überprüfen einer Anzahl von Regeln und das Anfügen von weiteren Codegenerierungsinformationen. Das Identifizieren und nachfolgende Modifizieren kann prinzipiell in einem beliebigen Zwischenschritt des Transformierens erfolgt.

Vorteilhafterweise identifiziert das erfindungsgemäße Verfahren nach i) oder ii) ausgestaltete Blockpaare und verändert die Signalverbindungen und/oder die Blockparametrierung, um unnötige Rechenoperationen zu vermeiden, so dass dann bei dem Erzeugen der Zwischendarstellung dies gar nicht erst angelegt werden müssen. Dadurch wird nicht nur insgesamt effizienterer Code erzeugt, sondern auch die Optimierung auf der Zwischendarstellung beschleunigt, da bereits zu Beginn weniger Rechenoperationen betrachtet werden müssen.

In diesem Zusammenhang ist gemäß einer weiteren bevorzugten Weiterbildung der Erfindung vorgesehen, dass das Optimieren der erzeugten Zwischendarstellung ein erneutes Identifizieren von nach i) und/oder ii) ausgestalteten Blockpaaren in dem der Zwischendarstellung entsprechenden modifiziertem Blockdiagramm umfasst. Alternativ oder zusätzlich kann vorgesehen sein, dass das Optimieren der erzeugten Zwischendarstellung ein Erzeugen einer optimierten Zwischendarstellung umfasst, die einem mehrfach modifizierten Blockdiagramm entspricht, bei dem nach einer ersten Modifikation des Blockdiagrammes eine oder mehrere weitere Identifikationen eines nach i) und/oder ii) ausgestalteten Blockpaares und entsprechende Modifikation des Blockdiagrammes erfolgt. In anderen Worten wird also bevorzugt beim Erzeugen der Zwischendarstellung nicht lediglich einmal geprüft, ob Blockpaare mit zueinander entgegengesetzten und/oder inversen Operationen vorhanden sind, sondern es wird mehrfach eine Identifikation und entsprechende Modifikation durchgeführt.

Gemäß einer weiteren Weiterbildung der Erfindung ist vorgesehen, dass das Steuerungsprogramm in C-Code erzeugt wird. Unter C-Code wird vorliegend eine Programmiersprache verstanden, die von der Syntax und/oder vom grundlegenden Sprachaufbau an C angelehnt ist. Solche Sprachen weisen beispielsweise durch Semikolons abgeschlossene Anweisungen, durch geschweifte Klammern getrennte Codeblöcke, durch Klammern getrennte Parameter und/oder in Infixnotation definierte arithmetische und logische Ausdrücke auf. Sie werden teilweise auch als "Sprachen mit geschweiften Klammern" bezeichnet. Bevorzugt umfasst C-Code vorliegend auch Code in der Programmiersprache C++, Handel-C und/oder SA-C. Weiter bevorzugt wird darunter eine standardisierte Form von C-Code wie ANSI C, ANSI C++, ISO C, ISO C++, Standard C und/oder Standard C++ verstanden, die vom *American National Standards Institute* (ANSI), ISO/IEC JTC 1/SC 22/WG 14 der *International Organization for Standardization* (ISO), ISO/IEC JTC 1/SC 22/WG 21 des "The C++ Standards Committee - ISOCPP" der *International Organization for Standardization* (ISO) und/oder der *International Electrotechnical Commission* (IEC) veröffentlicht werden.

Die Erfindung betrifft ferner ein Verfahren zum Konfigurieren einer als Steuergerät ausgestalteten Zielplattform, wobei die Zielplattform wenigstens eine Recheneinheit umfasst, und bevorzugt wenigstens einen Sensor und/oder Aktor aufweist, um Daten eines physikalischen Prozesses zu erfassen und/oder auf einen physikalischen Prozess einzuwirken, umfassend die Schritte:
- Einlesen eines graphischen Steuerungsmodell einer Entwicklungsplattform
- Erzeugen eines Steuerungsprogrammes für die Zielplattform aus dem eingelesenen graphischen Steuerungsmodell nach dem Verfahren nach dem oben beschriebenen Verfahren,
- Erzeugen eines für die Recheneinheit der Zielplattform ausführbaren Codes durch Kompilieren des erzeugten Steuerungsprogrammes,
- Übertragen des erzeugten ausführbaren Codes auf die Zielplattform und/oder Hinterlegen des erzeugten ausführbaren Codes auf einem nicht-flüchtigen Speicher der Zielplattform und/oder Ausführen des erzeugten ausführbaren Codes durch die Recheneinheit der Zielplattform.

Das Steuergerät umfasst bevorzugt eine Schnittstelle zur Verbindung mit der Entwicklungsplattform. Weiter bevorzugt umfasst das Steuergerät einen Mikrocontroller mit einer von einem Prozessor der Entwicklungsplattform abweichenden Architektur, einen Arbeitsspeicher und einen nichtflüchtigen Speicher.

Weiterhin betrifft die Erfindung eine Vorrichtung zur Datenverarbeitung umfassend Mittel zur Ausführung des oben beschriebenen computerimplementierten Verfahrens zum Erzeugen des Steuerungsprogrammes.

Ferner betrifft die Erfindung ein Computerprogrammprodukt umfassend Befehle, die bei der Ausführung des Programms durch einen Computer diesen veranlassen, das oben beschriebene computerimplementierte Verfahren zum Erzeugen des Steuerungsprogrammes auszuführen.

Ferner betrifft die Erfindung einen computerlesbaren Datenträger, auf dem das obige Computerprogrammprodukt gespeichert ist.

Bevorzugt sind die Befehle auf dem computerlesbaren Datenträger eingebettet, und die Befehle bewirken, wenn sie von einem Prozessor des Computers ausgeführt werden, dass der Prozessor das Verfahren zum Erzeugen des Steuerungsprogrammes ausführt.

Die technischen Vorteile und Effekte des Verfahrens zum Konfigurieren der als Steuergerät ausgestalteten Zielplattform, der Vorrichtung zur Datenverarbeitung, des Computerprogrammproduktes und des computerlesbaren Datenträgers ergeben sich für den Fachmann durch die Beschreibung des Verfahrens zum Erzeugen des Steuerungsprogrammes, sowie durch die nachfolgend beschriebenen Ausführungsbeispiele.

Die Erfindung wird nachfolgend unter Bezugnahme auf die Zeichnungen näher erläutert. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

In der Zeichnung zeigen
- Fig. 1: schematisch eine Vorrichtung zur Datenverarbeitung, gemäß einem bevorzugten Ausführungsbeispiel der Erfindung,
- Fig. 2: schematisch die auf der Vorrichtung gemäß Figur 1 installierten Softwarekomponenten,
- Fig. 3: schematisch ein Flussdiagramm eines Verfahrens zum Erzeugen eines Steuerungsprogrammes für eine Zielplattform aus einem graphischen Steuerungsmodell, gemäß einem bevorzugten Ausführungsbeispiel der Erfindung,
- Fig. 4: schematisch in a) ein Blockdiagramm eines graphisches Steuerungsmodell aus dem ein Steuerungsprogramm mittels des Verfahrens zum Erzeugen eines Steuerungsprogrammes, gemäß einem bevorzugten Ausführungsbeispiel der Erfindung, erzeugt wird, und in b) ein modifiziertes Blockdiagramm,
- Fig. 5: schematisch in a) ein weiteres Blockdiagramm aus dem ein Steuerungsprogramm mittels des Verfahrens zum Erzeugen eines Steuerungsprogrammes, gemäß einem bevorzugten Ausführungsbeispiel der Erfindung, erzeugt wird, und in b) ein modifiziertes Blockdiagramm, und
- Fig. 6: schematisch in a) ein weiteres Blockdiagramm aus dem ein Steuerungsprogramm mittels des Verfahrens zum Erzeugen eines Steuerungsprogrammes, gemäß einem bevorzugten Ausführungsbeispiel der Erfindung, erzeugt wird, und in b) ein modifiziertes Blockdiagramm,

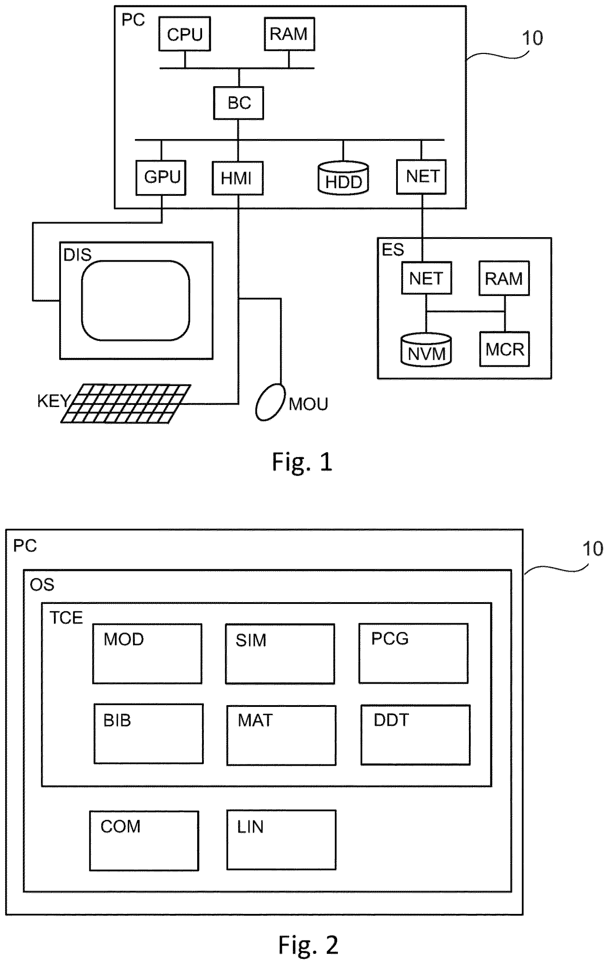

Figur 1 zeigt schematisch eine beispielhafte Ausführung einer Vorrichtung zur Datenverarbeitung 10, vorliegend Computersystem PC genannt. Das Computersystem PC ist dazu eingerichtet ein Verfahren zum Erzeugen eines Steuerungsprogrammes für eine Zielplattform aus einem graphischen Steuerungsmodell einer Entwicklungsplattform - sprich des Computersystems - auszuführen. Das Computersystem PC weist einen Prozessor CPU auf, der insbesondere als Mehrkernprozessor realisiert sein kann, einen Arbeitsspeicher RAM und einen Buscontroller BC. Bevorzugt ist das Computersystem PC dazu ausgelegt, von einem Nutzer direkt manuell bedient zu werden, wobei über eine Grafikkarte GPU ein Monitor DIS und über eine Mensch-Maschine-Schnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem PC umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES - sprich die Zielplattform - angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für die Zielplattform ausgeführt sein. Zweckmäßigerweise umfasst es eine Schnittstelle NET zur Verbindung mit dem Computersystem PC, einen Mikrocontroller MCR mit einer von dem Prozessor des Computersystems PC abweichenden Architektur, einen Arbeitsspeicher RAM und einen nichtflüchtigen Speicher NVM.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner und/oder dem Steuergerät ES aufzubauen.

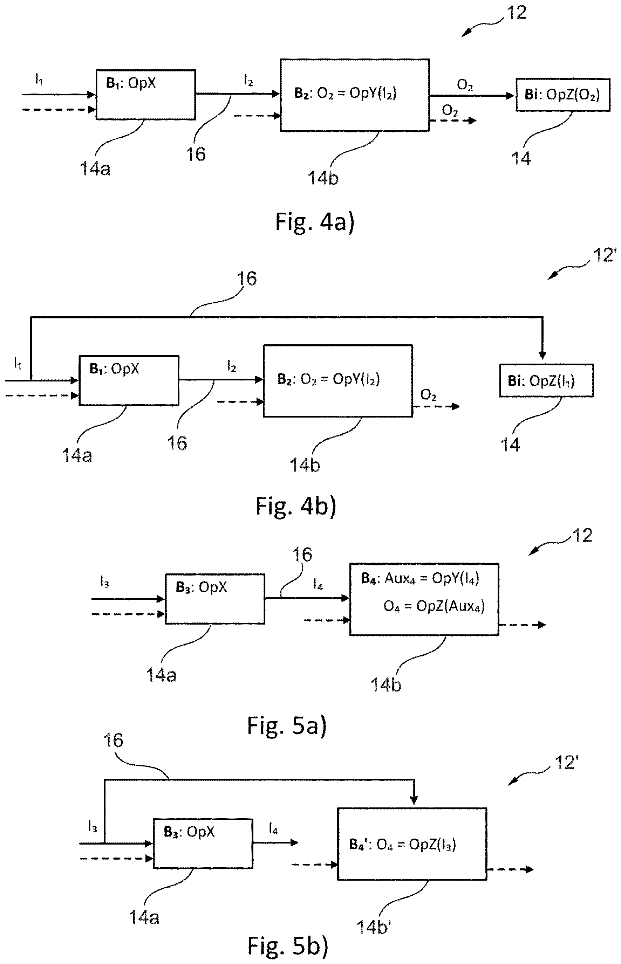

Eine technische Rechenumgebung TCE ermöglicht die Erstellung von Modellen - insbesondere graphische Steuerungsmodelle 12 (in Figur 2 nicht dargestellt, aber in den Figuren 4, 5 und 6 gezeigt), und die Erzeugung eines Steuerungsprogrammes, auch Quellcode genannt, aus den graphischen Steuerungsmodellen 12. In einer Modellierumgebung MOD können vorzugsweise über eine graphische Benutzerschnittstelle graphischen Steuerungsmodellen 12 eines dynamischen Systems erstellt werden. Hierbei kann es sich insbesondere um Blockdiagramme 12 handeln, welche mehrere Blöcke 14 (ebenfalls nicht in Figur 2 gezeigt, aber in den Figuren 4, 5 und 6 gezeigt) umfassen und das zeitliche Verhalten und/oder interne Zustände eines dynamischen Systems beschreiben. Zumindest einige der Blöcke 14 sind über Signalverbindungen 16 (ebenfalls nicht in Figur 2 gezeigt, aber in den Figuren 4, 5 und 6 gezeigt) miteinander verbunden, wobei die Signalverbindungen 16 gerichtete Verbindungen zum Austausch von Daten darstellen, wobei die Daten skalar oder zusammengesetzt sein können. Über die Blöcke 14 können auf den Daten durchzuführende Operationen und/oder Rechenschritte definiert werden. Blöcke 14 können atomar sein, also aus Sicht der umgebenden Blöcke 14 eine Einheit bilden, bei der zu Beginn eines Rechenschritts alle Eingangssignale anliegen müssen und zu Ende eines Rechenschritts alle Ausgangssignale vorhanden sind. Wenn Blockdiagramme 12 hierarchisch sind, kann eine Vielzahl von Blöcken 14 in einer untergeordneten Ebene den Aufbau eines Blocks 14 in einer übergeordneten Ebene beschreiben. Hierarchische bzw. zusammengesetzte Blöcke 14, auch wenn diese atomar sind, können eine Vielzahl von Blöcken 14 in einer untergeordneten Ebene umfassen. Zusammengesetzte Blöcke 14 können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke 14 angeordnet sein, um die Eigenschaften des Subsystems weiter zu spezifizieren.

Die Rechenumgebung TCE umfasst eine oder mehrere Bibliotheken BIB, aus der Blöcke 14 bzw. Bausteine für den Aufbau eines Modells 12 ausgewählt werden können. In einer Skriptumgebung MAT können Anweisungen interaktiv oder über eine Batchdatei eingegeben werden, um Berechnungen durchzuführen oder das Modell 12 zu modifizieren. Die Rechenumgebung TCE umfasst weiterhin eine Simulationsumgebung SIM, die dazu eingerichtet ist, das Blockdiagramm 12 zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems PC.

Aus einem erstellten Modell 12 kann mit Hilfe eines Codegenerators PCG der Quellcode bevorzugt in einer Programmiersprache wie C erzeugt werden. Dafür wird im vorliegenden Ausführungsbeispiel das Verfahren zum Erzeugen eines Steuerungsprogrammes für eine Zielplattform aus dem graphischen Steuerungsmodell 12 der Entwicklungsplattform durchgeführt. In einer Definitionsdatensammlung DDT werden zweckmäßigerweise zusätzliche Informationen zu dem Modell 12, insbesondere zu den Variablen in den Blöcken 14 - Blockvariablen genannt - hinterlegt. Zweckmäßigerweise werden den Blockvariablen Wertebereiche und/oder Skalierungen zugeordnet, um eine Berechnung des Modells 12 mit Festkomma-Instruktionen zu unterstützen. Auch gewünschte Eigenschaften des Quellcodes, beispielsweise Konformität zu einem Standard wie MISRA, können in der Definitionsdatensammlung DDT eingestellt bzw. hinterlegt werden. Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Zudem können in der Definitionsdatensammlung DDT auch Angaben zu zueinander entgegengesetzten und/oder inversen Operationen der Blöcke 14 hinterlegt werden.

Der Codegenerator PCG wertet vorzugsweise die Einstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung kann eine Programmschnittstelle und/oder Import-/Export-Funktionen aufweisen.

Das Computersystem PC weist in diesem Ausführungsbeispiel einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

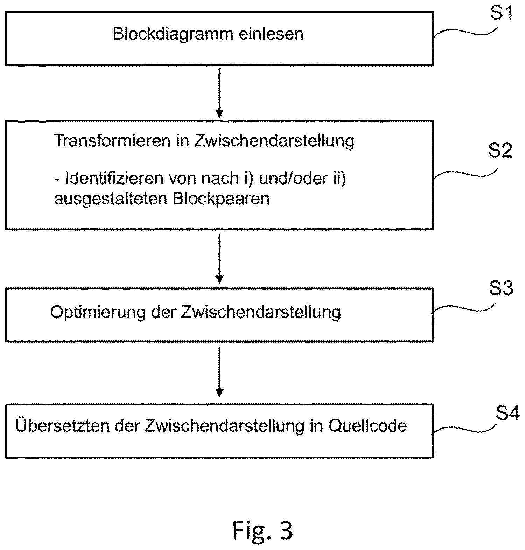

Figur 3 zeigt einen schematischen Ablaufplan einer Ausführungsform des erfindungsgemäßen Verfahrens zum Erzeugen eines Steuerungsprogrammes für eine Zielplattform aus dem graphischen Steuerungsmodell 12 der Entwicklungsplattform. Das Verfahren kann vollständig von einem Prozessor einer beispielhaften Ausführung des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte auf den Servern durchgeführt werden.

In Schritt S1 (Blockdiagramm einlesen) wird ein graphisches Steuerungsmodell 12 umfassend ein Blockdiagramm 12 eingelesen. In den Figuren 4 bis 6 sind beispielshafte Blockdiagramme 12 dargestellt. Das Blockdiagramm 12 umfasst mindestens ein Blockpaar, das aus zwei Blöcken 14a 14b besteht, die durch mindestens einer Signalverbindung 16 miteinander in der Form verbunden sind, dass ein Ausgang des ersten Blockes 14a einen Eingang des zweiten Blockes14b treibt. Das Blockdiagramm 12 kann eine Vielzahl weiterer Blöcke 14 enthalten. Zweckmäßigerweise umfasst das Einlesen des Blockdiagramms 12 auch ein Auslesen mindestens einer Blockeigenschaft und/oder für die Codeerzeugung relevante Einstellungen, wie beispielsweise der Datentyp einer Variablen, aus der Definitionsdatensammlung DDT.

In Schritt S2 (Transformiere in Zwischendarstellung), wird das graphische Steuerungsmodell 12 in eine Zwischendarstellung transformiert, die vorzugsweise einen oder mehrere hierarchische Graphen umfasst. Hierbei kann es sich insbesondere um einen Datenflussgraph, einen Kontrollflussgraph oder eine Baumstruktur handeln. Neben dem Blockdiagramm 12 werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden oder Eigenschaften von Elementen bzw. für die Codeerzeugung relevante Einstellungen, wie beispielsweise der Datentyp einer Variablen, aus der Definitionsdatensammlung DDT extrahiert werden.

Beim Transformieren in die Zwischendarstellung werden im Blockdiagramm 12 Blockpaare identifiziert, bei denen der erste und der zweite Block 14a 14b mit mindestens einer Signalverbindung 16 miteinander in der Form verbunden sind, dass ein Ausgang des ersten Blockes 14a einen Eingang des zweiten Blockes 14b treibt, und bei denen
i) der erste Block 14a und der zweite Block 14b in der Form ausgestaltet sind, dass ein Eingangssignal Ii des ersten Blockes 14a einem Ausgangssignal O₂ des zweiten Blockes 14b entspricht; oder
ii) der erste Block 14a und der zweite Block 14b in der Form ausgestaltet sind, dass ein Eingangssignal I₃ des ersten Blockes 14a einem Zwischenergebnis Aux₄ des zweiten Blockes 14b entspricht, und der zweite Block 14b in der Form ausgestaltet ist, dass bei einer das Zwischenergebnis Aux₄ verwendenden Operation OpZ des zweiten Blockes 14b ein Eingangssignal dieser Operation OpZ ersetzbar ist.

Im vorliegenden Ausführungsbeispiel werden während der Transformation in die Zwischendarstellung spezifisch ausgestaltete Blockpaare identifiziert. Insbesondere mit Verweis auf die Figuren 4a) und 5a) wird dies näher erläutert: In Figur 4a) ist ein Bockdiagramm 12 gezeigt, bei dem im ersten Block 14a, auch mit B₁ gekennzeichnet, auf das Eingangssignal I₁ die Operation OpX ausgeführt wird. Dabei entsteht das Ergebnis I₂, das den Eingang des zweiten Blocks B₂ treibt. Im zweiten Block 14b, auch als B₂ genkennzeichnet, wird auf dem Signal I₂ die Operation OpY durchgeführt und dies als Ausgangssignal O₂ an einen Nachfolgeblock Bᵢ weitergegeben. Die Operation OpX und OpY sind zueinander invers, so dass gilt: OpX o OpY = Id. Id bezeichnet vorliegend den Identität-Operator, der das Eingangssignal unverändert zurückgibt. Entsprechend entspricht das Ausgangssignal O₂ des zweiten Blockes 14b, B₂ dem Eingangssignal Ii des ersten Blockes 14a, B₁.

In Figur 5a) ist ein Bockdiagramm 12 gezeigt, bei dem im ersten Block 14a, auch als B₃ gekennzeichnet, auf das Eingangssignal I₃ die Operation OpX ausgeführt wird. Dabei entsteht das Ergebnis I₄, das den Eingang des zweiten Blocks 14b, auch als B₄ genkennzeichnet, treibt. In Block B₄ wird mit der Operation OpY auf dem Signal I₄ das Zwischenergebnis Aux₄ erzeugt, das anschließend in der nachfolgenden Operation OpZ im zweiten Block weiterverarbeite wird. Die Operation OpX und OpY sind zueinander invers, so dass gilt: OpX o OpY = Id. Id bezeichnet den Identität-Operator, der das Eingangssignal unverändert zurückgibt. Entsprechend entspricht das Zwischenergebnis Aux₄ dem Eingangssignal I₃ des ersten Blockes B₃. Zudem ist der zweite Block B₄ in der Form ausgestaltet, dass bei der das Zwischenergebnis Aux₄ verwendenden Operation OpZ das Eingangssignal dieser Operation ersetzbar ist.

Im vorliegenden Ausführungsbeispiel wird bei der Transformation in die Zwischendarstellung nicht nur die spezifisch nach i) oder ii) ausgestaltete Blockpaare identifiziert. Es wird zudem die Zwischendarstellung direkt in der Form erzeugt, dass sie einem modifizierten Blockdiagramm 12' entspricht, das das gleiche Verhalten wie das ursprüngliche Blockdiagramm 12 aufweist, bei dem allerdings unnötige Operationen und Verbindungen nicht enthalten sind.

Vorliegend wird also bei Identifikation eines nach i) ausgestalteten Blockpaares die Zwischendarstellung in der Form erzeugt, dass sie einem modifizierten Blockdiagramm 12' entspricht, bei dem eine Abzweigung vor dem ersten Block 14a mit dem Eingangssignal Ii des ersten Blockes 14a unter Umgehung des ersten und zweiten Blockes 14a, 14b einen Nachfolgeblock Bᵢ des zweiten Blockes 14b treibt. Dies ist in Figur 4b) ersichtlich, die das modifizierte Blockdiagramm 12' zeigt. Darin ist eine Abzweigung vorhanden, die das Eingangssignal Ii des ersten Blockes B₁ unter Umgehung des ersten Blockes 14a, B₁ und unter Umgehung des zweiten Blockes 14b, B₂ an den Nachfolgeblock Bᵢ weiterleitet. Zudem ist die Signalverbindung zwischen dem zweiten Block 14b, B₂ und dem Nachfolgeblock Bᵢ aufgehoben.

Weiterhin wird vorliegend bei Identifikation eines nach ii) ausgestalteten Blockpaares die Zwischendarstellung in der Form erzeugt, dass sie einem modifizierten Blockdiagramm 12' entspricht, bei dem eine Abzweigung vor dem ersten Block 14a mit dem Eingangssignal I₃ des ersten Blockes 14a unter Umgehung des ersten Blockes 14a den zweiten umparametrierten Block 14b` treibt, und wobei beim umparametrierten Block 14b` das Eingangssignal der das Zwischenergebnis Aux₄ verwendenden Operation OpZ durch das Eingangssignal I₃ des ersten Blockes 14a ersetzt ist. Dies ist in Figur 5b) ersichtlich, das das modifizierte Blockdiagramm 12' zeigt. Darin ist eine Abzweigung vorhanden, die das Eingangssignal I₃ des ersten Blockes 14a, B₃ unter Umgehung des ersten Blockes 14a, B₃ an den zweiten umparametrierten Blockes 14b', B₄' weiterleitet. Im umparametrierten Block 14b', B₄' ist das Eingangssignal der das Zwischenergebnis Aux₄ verwendenden Operation OpZ durch das Eingangssignal I₃ des ersten Blockes 14a, B₃ ersetzt. Zudem ist die Signalverbindung zwischen dem ersten Block 14a, B₃ und dem zweiten umparametrierten Block 14b` B₄' aufgehoben.

Indem die Zwischendarstellung direkt in der Form erzeugt wird, dass sie einem modifizierten Blockdiagramm 12' entspricht, können unnötige Rechenoperationen und Signalverbindungen 16 vermieden werden, so dass bei dem Erzeugen der Zwischendarstellung diese gar nicht erst angelegt werden müssen. Dadurch wird nicht nur insgesamt effizienterer Code erzeugt, sondern auch die nachfolgende Optimierung auf der Zwischendarstellung beschleunigt, da bereits zu Beginn weniger Rechenoperationen betrachtet werden müssen.

Zurück zu Figur 3 wird in Schritt S3 (weitere Optimierung Zwischendarstellung) die Zwischendarstellung optimiert und insbesondere die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm 12 und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Verschiedene Strategien wie "Constant folding" oder eine Eliminierung von "Dead Code" können während der Optimierung angewandt werden. Prinzipiell ist es möglich, dass mehrere in Rahmen der Transformation erzeugte Variablen in Schritt S3 zusammengefasst werden.

In Schritt S4 (Übersetze Zwischendarstellung in Quellcode) werden die optimierte Zwischendarstellung bzw. die optimierten hierarchischen Graphen, welche aus den gesamten durchgeführten Zwischenschritten resultieren, in Quellcode einer textuellen Programmiersprache, vorliegend C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block 14 des Blockdiagramms 14, zu erzeugen und insbesondere in Form von Kommentaren in den Quellcode einzubinden, um die Lesbarkeit des Quellcodes zu verbessern und/oder ein Debugging zu vereinfachen.

Während oder nach der Codegenerierung können Informationen über das aktuelle - sprich das modifizierte oder mehrfach modifizierte Blockdiagramm 12' oder Ergebnisse der Codegenerierung, wie beispielsweise generierte Warnungen, in der Definitionsdatensammlung DDT gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht nach dem AUTOSAR-Standard.

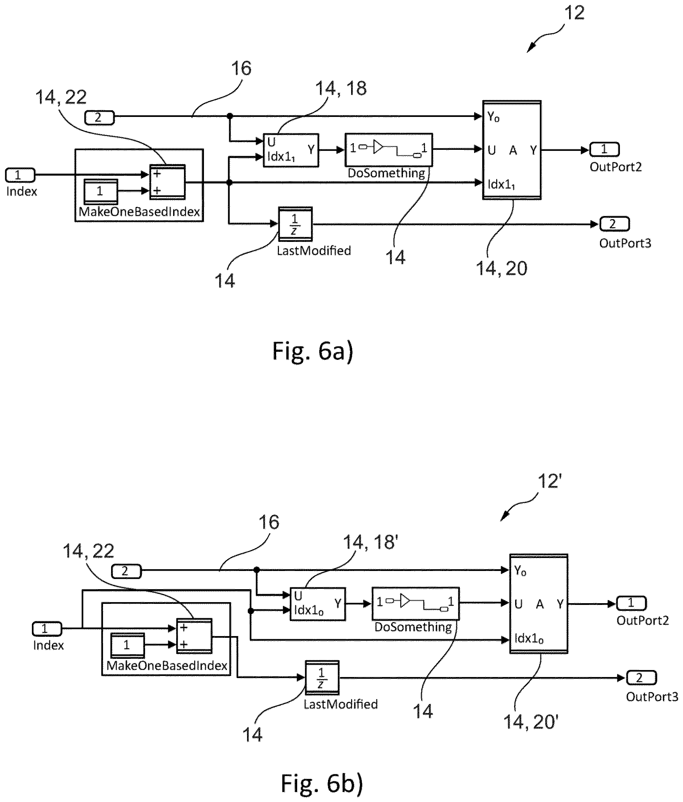

Nachfolgend wird mit Bezug auf Figur 6 ein weiteres Ausführungsbeispiel der Erfindung erläutert. In der Entwicklerplattform im graphisches Steuerungsmodell 12 starten Array-Indizes standardmäßig bei 1. Der Nutzer enthält in der Entwicklungsplattform somit bei den Blöcken 14 Selector-Block 18 und Assignment-Block 20 ein one-based-Indexing, also eine bei 1 startende Indizierung. In der Programmiersprache C, in der das Steuerungsprogramm erzeugt wird, starten Array-Indizes standardmäßig bei 0. Beim Erzeugen des Steuerungsprogrammes wird das vom Nutzer spezifizierte Blockdiagramm 12 umgesetzt und entsprechend die Index-Zugriffe im generierten C-Code mit "- 1"-Zugriffen umgesetzt.

In gewissen und beispielhaft nachfolgend beschriebenen Situationen liegt der Index allerdings schon im graphisches Steuerungsmodell 12 als zero-based-Indexing vor und der Nutzer korrigiert den Index im Steuerungsmodell 12 mit einer modellierten +1-Operation. Figur 6a) zeigt, dass für den Selektor Block 18 und den Assignment Block 20 für die Index-Eingänge ein one-based Indexing vorliegt. Der Summen-Block 22 berechnet den entsprechenden Indexwert erst.

Eine Codegenerierung in Pseudocode für genau das in Figur 6a) dargestellte Blockdiagramm 12 und ohne, dass beim Erzeugen der Code in der Form erzeugt wird, dass er einem modifiziertem Blockdiagramm entspricht, ergibt folgendes:

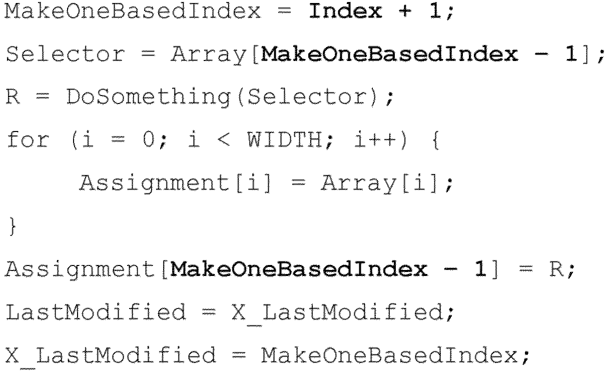

Dieser Code kann nur verglichen werden mit eine im nachfolgenden dargestellten Code, bei dem beim Erzeugen des Codes für die Zielplattform aus dem graphischen Steuerungsmodell 12 beim Erzeugen der Zwischendarstellung diese in der Form erzeugt wird, dass sie dem in Figur 6b) gezeigten modifizierten Blockdiagramm 12' entspricht, bei dem eine Abzweigung vor dem Summen-Block 22 mit dem Eingangssignal des Summen-Blockes 22 unter Umgehung des Summen-Blockes 22 den umparametrierten Selektor-Block 18' und den umparametrierten Assignment-Block 20' treibt, wobei bei den umparametrierten Selektor- und Assignment-Blöcke 18', 20' das Eingangssignal durch das Eingangssignal des Summen-Blockes 22 ersetzt ist. In anderen Worten wird also die modellierte Erhöhung um +1 mit der -1 aus dem one-based-Indexing verrechnet, indem die +1-Berechnung umgangen wird. In Figur 6b) ist zu erkennen, dass ein direkter Anschluss des Index-Signals (= Eingangssignals des Summen-Blocks 22) an die umparametrierten Selector- und Assignment-Blöcke 18', 20' vorliegt, und dass der umparametrierte Selector-Block 18' und der umparametrierte Assignment-Block 20' jeweils auf zero-based-Indexing umgestellt sind. Diese Modellierung 12', die das gleiche Verhalten aufweist wie die Modellierung 12 in Figur 6a) vermeidet zueinander inverse Operationen wie der folgende auf Basis vom Modell 12' in Figur 6b) erzeugte Codegenerierung in Pseudocode zeigt:

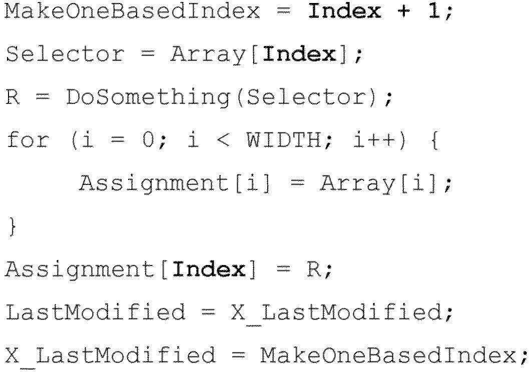

### Bezugszeichenliste

- 10: Vorrichtung zur Datenverarbeitung
- 12: graphisches Steuerungsmodell, Blockdiagramm
- 12': modifiziertes Blockdiagramm
- 14: Blöcke
- 14a, B₁, B₃: erster Block
- 14b, B₂, B₄: zweiter Block
- 14b', B₄': umparametrierter zweiter Block
- 16: Signalverbindung
- 18: Selector-Block
- 20: Assignment-Block
- 22: Summen-Block

- I₁, I₃: Eingangssignal des ersten Blockes
- O₂: Ausgangssignal des zweiten Blockes
- Aux₄: Zwischenergebnis des zweiten Blockes
- OpZ: das Zwischenergebnis verwendende Operation
- Bᵢ: Nachfolgeblock
- OpX, OpY: zueinander entgegengesetzte Operationen

- PC: Computersystem
- CPU: Prozessor
- RAM: Arbeitsspeicher
- BC: Buscontroller
- GPU: Grafikkarte
- DIS: Monitor
- HMI: Peripherieschnittstelle
- KEY: Tastatur
- MOU: Maus
- HDD: nichtflüchtiger Datenspeicher
- NET: Schnittstelle, Netzwerkschnittstelle
- ES: Steuergerät
- MCR: Microcontroller
- NVM: Speicher
- OS: Betriebssystem
- TCE: technische Rechenumgebung
- MOD: Modellierungsumgebung
- BIB: Bibliothek
- MAT: Skriptumgebung
- SIM: Simulationsumgebung
- PCT: Codegenerator
- DDT: Definitionsdatensammlung
- COM: Compiler
- LIN: Linker

## Patentansprüche

1. Computerimplementiertes Verfahren zum Erzeugen eines Steuerungsprogrammes für eine Zielplattform aus einem graphischen Steuerungsmodell (12) einer Entwicklungsplattform,
wobei das graphische Steuerungsmodell (12) ein Blockdiagramm (12) mit einer Mehrzahl von Blöcken (14) umfasst,
**dadurch gekennzeichnet, dass**
beim Erzeugen des Steuerungsprogrammes für die Zielplattform aus dem graphischen Steuerungsmodell (12) Blockpaare umfassend einen ersten und einen zweiten Bock (14a, 14b) identifiziert werden, bei denen der erste und der zweite Block (14a, 14b) mit mindestens einer Signalverbindung (16) miteinander in der Form verbunden sind, dass ein Ausgang des ersten Blockes (14a) einen Eingang des zweiten Blockes (14b) treibt, und bei denen
i) der erste Block (14a) und der zweite Block (14b) in der Form ausgestaltet sind, dass ein Eingangssignal (Ii) des ersten Blockes (14a) im Rahmen einer für die Ausführung des Steuerungsprogrammes notwendigen Rechengenauigkeit und für alle Werte in einem für die Ausführung des Steuerungsprogrammes notwendigen Wertebereich einem Ausgangssignal (O₂) des zweiten Blockes (14b) entspricht; oder
ii) der erste Block (14a) und der zweite Block (14b) in der Form ausgestaltet sind, dass ein Eingangssignal (I₃) des ersten Blockes (14a) im Rahmen einer für die Ausführung des Steuerungsprogrammes notwendigen Rechengenauigkeit und für alle Werte in einem für die Ausführung des Steuerungsprogrammes notwendigen Wertebereich einem Zwischenergebnis (Aux₄) des zweiten Blockes (14b) entspricht, und der zweite Block (14b) in der Form ausgestaltet ist, dass bei einer das Zwischenergebnis (Aux₄) verwendenden Operation (OpZ) des zweiten Blockes (14b) ein Eingangssignal dieser Operation (OpZ) ersetzbar ist.

2. Verfahren nach Anspruch 1, wobei bei Identifikation eines nach i) ausgestalteten Blockpaares das Steuerungsprogrammes in der Form erzeugt wird, dass es einem modifizierten Blockdiagramm (12') entspricht, bei dem eine Abzweigung vor dem ersten Block (14a) mit dem Eingangssignal (I₁) des ersten Blockes (14a) unter Umgehung des ersten und zweiten Blockes (14a, 14b) einen Nachfolgeblock des zweiten Blockes (14b) treibt.

3. Verfahren nach einem der vorherigen Ansprüche, wobei bei Identifikation eines nach ii) ausgestalteten Blockpaares das Steuerungsprogramm in der Form erzeugt wird, dass es einem modifizierten Blockdiagramm (12') entspricht, bei dem eine Abzweigung vor dem ersten Block (14a) mit dem Eingangssignal (I₃) des ersten Blockes (14a) unter Umgehung des ersten Blockes (14a) den zweiten umparametrierten Block (14b') treibt, und wobei beim umparametrierten Block (14b`) das Eingangssignal der das Zwischenergebnis (Aux₄) verwendenden Operation (OpZ) durch das Eingangssignal (I₃) des ersten Blockes (14a) ersetzt ist.

4. Verfahren nach einem der Ansprüche 2 oder 3, wobei das Steuerungsprogramm in der Form erzeugt wird, dass es einem mehrfach modifizierten Blockdiagramm entspricht, bei dem nach einer ersten Modifikation des Blockdiagrammes (12) eine oder mehrere weitere Identifikationen eines nach i) und/oder ii) ausgestalteten Blockpaares und entsprechende Modifikation des Blockdiagrammes (12') erfolgt.

5. Verfahren nach einem der vorherigen Ansprüche, wobei bei Identifikation eines nach i) und/oder ii) ausgestalteten Blockpaares beim Erzeugen des Steuerungsprogrammes eine Warnung generiert wird.

6. Verfahren nach einem der vorherigen Ansprüche, wobei der zweite Block (14b) des Blockpaares als Selector-Block (18) oder als Assignment-Block (20) ausgestaltet ist.

7. Verfahren nach einem der vorherigen Ansprüche, wobei der erste und zweite Block (14a, 14b) des Blockpaares zueinander inverse Operationen (OpX, OpY) und/oder zueinander entgegengesetzte Operationen (OpX, OpY) ausführen.

8. Verfahren nach einem der vorherigen Ansprüche, wobei der erste und zweite Block (14a, 14b) des Blockpaares dahingehend ausgestaltet sind, dass sie
- zueinander additiv inversen Operationen,
- zueinander logisch inversen Operationen,
- zueinander bitweise inversen Operationen,
- zueinander inversen mathematischen Funktionen,
- zueinander multiplikativ inversen Operationen,
- zueinander entgegengesetzte Datentypumwandlungen, und/oder
- Verknüpfungen davon,
durchführen; und/oder
wobei der erste und zweite Block (14a, 14b) des Blockpaares dahingehend ausgestaltet sind, dass sie Verknüpfungen von Operationen durchführen, die in ihrer Gesamtheit invers zueinander sind.

9. Verfahren nach einem der vorhergehenden Ansprüche, wobei das Erzeugen des Steuerungsprogrammes für die Zielplattform aus dem graphischen Steuerungsmodell (12) der Entwicklungsplattform die Schritte
- Erzeugen einer Zwischendarstellung aus dem graphischen Steuerungsmodell (12),
- Optimieren der erzeugten Zwischendarstellung, und
- Erzeugen des Steuerungsprogrammes für die Zielplattform durch Übersetzen der optimierten Zwischendarstellung,
umfasst, und wenigstens einer der Schritte, und insbesondere der Schritt Erzeugen der Zwischendarstellung, das Identifizieren von nach i) und/oder ii) ausgestalteten Blockpaaren umfasst.

10. Verfahren nach dem vorhergehenden Anspruch, wobei bei Identifikation eines nach i) ausgestalteten Blockpaares die Zwischendarstellung in der Form erzeugt wird, dass sie einem modifizierten Blockdiagramm (12') entspricht, bei dem eine Abzweigung vor dem ersten Block (14a) mit dem Eingangssignal (Ii) des ersten Blockes (14a) unter Umgehung des ersten und zweiten Blockes (14a, 14b) einen Nachfolgeblock des zweiten Blockes (14b) treibt.

11. Verfahren nach dem Anspruch 9 oder 10, wobei bei Identifikation eines nach ii) ausgestalteten Blockpaares die Zwischendarstellung in der Form erzeugt wird, dass sie einem modifizierten Blockdiagramm (12') entspricht, bei dem eine Abzweigung vor dem ersten Block (14a) mit dem Eingangssignal (I₃) des ersten Blockes (14a) unter Umgehung des ersten Blockes (14a) den zweiten umparametrierten Block (14b') treibt, und wobei beim umparametrierten Block (14b`) das Eingangssignal der das Zwischenergebnis (Aux₄) verwendenden Operation (OpZ) durch das Eingangssignal (I₃) des ersten Blockes (14a) ersetzt ist.

12. Verfahren nach Anspruch 10 oder 11, wobei das Optimieren der erzeugten Zwischendarstellung ein erneutes Identifizieren von nach i) und/oder ii) ausgestalteten Blockpaaren in dem der Zwischendarstellung entsprechenden modifiziertem Blockdiagramm (12') umfasst, und/oder
ein Erzeugen einer optimierten Zwischendarstellung umfasst, die einem mehrfach modifizierten Blockdiagramm entspricht, bei dem nach einer ersten Modifikation des Blockdiagrammes (12) eine oder mehrere weitere Identifikationen eines nach i) und/oder ii) ausgestalteten Blockpaares und entsprechende Modifikation des Blockdiagrammes (12') erfolgt.

13. Verfahren zum Konfigurieren einer als Steuergerät (ES) ausgestalteten Zielplattform, wobei die Zielplattform wenigstens eine Recheneinheit (MCR) umfasst und bevorzugt wenigstens einen Sensor und/oder Aktor aufweist, um Daten eines physikalischen Prozesses zu erfassen und/oder auf einen physikalischen Prozess einzuwirken, umfassend die Schritte:
- Einlesen eines graphischen Steuerungsmodell (12) einer Entwicklungsplattform,
- Erzeugen eines Steuerungsprogrammes für die Zielplattform aus dem eingelesenen graphischen Steuerungsmodell (12) nach dem Verfahren nach einem der vorhergehenden Ansprüche,
- Erzeugen eines für die Recheneinheit (MCR) der Zielplattform ausführbaren Codes durch Kompilieren des erzeugten Steuerungsprogrammes,
- Übertragen des erzeugten ausführbaren Codes auf die Zielplattform und/oder Hinterlegen des erzeugten ausführbaren Codes auf einem nicht-flüchtigen Speicher (NVM) der Zielplattform und/oder Ausführen des erzeugten ausführbaren Codes durch die Recheneinheit (MCR) der Zielplattform.

14. Vorrichtung (10) zur Datenverarbeitung umfassend Mittel zur Ausführung des Verfahrens nach einem der Ansprüche 1 bis 12.

15. Computerprogrammprodukt, umfassend Befehle, die bei der Ausführung des Programms durch einen Computer diesen veranlassen, das Verfahren nach einem der Ansprüche 1 bis 12 auszuführen.
